## Europäisches Patentamt
### European Patent Office
### Office européen des brevets

(19)

(11) Veröffentlichungsnummer: **0 026 483**
**B1**

(12)

# EUROPÄISCHE PATENTSCHRIFT

(45) Veröffentlichungstag der Patentschrift:
11.07.84

(51) Int. Cl.³: **C 08 F 222/06** // D21H3/38,
(C08F222/06, 232/08, 210/14)

(21) Anmeldenummer: 80105833.0

(22) Anmeldetag: 26.09.80

(54) Copolymerisat aus Maleinsäureanhydrid, Dicyclopentadien und Vinylcyclohexen und dessen Verwendung als anionisches Papieroberflächenleimungsmittel.

(30) Priorität: 28.09.79 DE 2939293

(43) Veröffentlichungstag der Anmeldung:
08.04.81 Patentblatt 81/14

(45) Bekanntmachung des Hinweises auf die Patenterteilung:
11.07.84 Patentblatt 84/28

(84) Benannte Vertragsstaaten:
BE CH DE FR GB IT LI LU NL SE

(56) Entgegenhaltungen:
EP - A - 0 000 221
DE - A - 2 658 857
GB - A - 1 255 838

(73) Patentinhaber: CHEMISCHE WERKE HÜLS AG,
Postfach 1320, D-4370 Marl 1 (DE)

(72) Erfinder: Gude, Fritz, Dr., Wilhelmstrasse 4,
D-4690 Herne 2 (DE)
Erfinder: Haferkorn, Herbert, Horster Strasse 528,
D-4250 Bottrop (DE)
Erfinder: Schülde, Felix, Dr., Am Gecksback 20,
D-4273 Wulfen (DE)

(74) Vertreter: Steil, Hanna, Dipl.-Chem., RSP PATENTE -
PB 15 Postfach 1320, D-4370 Marl 1 (DE)

## Beschreibung

In der DE-OS 2 727 510 wird ein anionisches Papieroberflächenleimungsmittel beschrieben, das gute Werte bei Verwendung von Copolymerisaten aus Maleinsäureanhydrid und Dicyclopentadien nach anschliessendem Umsatz mit Ammoniak oder primären oder sekundären Aminen in wässriger Lösung besitzt. Das zur Anwendung kommende Copolymerisat erhält man in an sich bekannter Weise durch Polymerisation in Lösung oder Suspension in Gegenwart von radikalischen Katalysatoren.

Weiter ist bekannt, 4-Vinylcyclohexen mit Maleinsäureanhydrid umzusetzen. Dabei kommt Azobisisobutyronitril als Katalysator zum Einsatz. Anwendungen dieses Copolymerisats wurden nicht beschrieben.

In der russischen Patentschrift 370 215 wird ein Telomeres unter Schutz gestellt, das durch radikalische Mischpolymerisation von Maleinsäureanhydrid, Vinylcyclohexen und Tetrachlorkohlenstoff hergestellt wird. In dem Beispiel lässt man 20 Stunden bei 65–70 °C reagieren und erreicht eine Ausbeute von etwa 43% der Theorie.

Es ist allgemein bekannt, Papier in der Masse unter Verwendung von Kolophoniumharzseifen und Aluminium-Ionen zu leimen. Neben den bekannten Leimen auf Kolophoniumharzbasis haben sich auch Lösungen oder Dispersionen von polymeren Verbindungen zur Papierleimung bewährt. Der Vorteil solcher Kunststoffleime besteht u.a. darin, dass sie auch auf die bereits fertige Papieroberfläche aufgebracht werden können, während ein normaler Harzleim mit Aluminium-Ionen auf die Papierfaser ausgefällt wird.

Die Verwendung von synthetischen Polymerleimen ermöglicht eine Papierleimung ohne Zusatz von Metallsalzen. Als derartige Leimungsmittel sind Lösungen oder Dispersionen von statistischen Copolymerisaten aus ungesättigten Carbonsäuren bzw. deren Derivaten mit bestimmten äthylenisch ungesättigten Verbindungen geeignet. Der Leimungsgrad der mit diesen, dem Stand der Technik entsprechenden Copolymerisaten geleimten Papiere entspricht nicht in allen Fällen, z.B. bei der Leimung von in der Masse vorgeleimtem Papier, den technischen Erfordernissen.

Aus der DT-OS 1 621 693 ist bekannt, dass für die Papieroberflächenleimung bernsteinsäureimidgruppenhaltige Copolymere verwendet werden können, bei deren Herstellung als Comonomere vinyloge Verbindungen eingesetzt werden. Als mögliches Vinyloges wird u.a. Dicyclopentadien genannt. Um die beschriebenen Copolymerisate für die Papierleimung löslich zu machen, müssen diese mit Ammoniak, Alkalilaugen oder Aminen umgesetzt werden. Wegen der enthaltenen Imidgruppen entsteht hierbei eine Vielzahl von Abkömmlingen.

Bei dem vorgenannten Verfahren ist es zur Herstellung der Imidgruppen notwendig, entweder Maleinsäureanhydrid in Maleinsäureimid zu überführen oder bei einem aus Maleinsäureanhydrid und Vinylogen hergestellten Copolymerisat nachträglich die Imidgruppierungen auszubilden.

Aus wirtschaftlichem Interesse ist es jedoch wünschenswert, die Herstellung der zur Papierleimung verwendeten Copolymerisate nach Möglichkeit zu vereinfachen und aus Gründen besserer Reproduzierbarkeit die Zahl der Abkömmlinge beim Löslichmachen in Grenzen zu halten.

Es wurde nun überraschenderweise gefunden, dass Copolymerisate aus Maleinsäureanhydrid, Dicyclopentadien und Vinylcyclohexen, die keine Imidstruktur enthalten – und mithin bei der Herstellung einen aufwendigen Arbeitsgang einsparen – hochwirksame Papierleimungsmittel darstellen, die in der Wirksamkeit den vorstehend beschriebenen erheblich überlegen sind und sowohl auf ungeleimten wie auch in der Masse vorgeleimten Papier ausgezeichnete Leimungswirkung besitzen. Die Copolymerisate sowie ihre Verwendung für die Papierleimung sind bisher nicht bekannt.

Gegenstand der Erfindung sind daher Copolymerisate, bestehend aus Maleinsäureanhydrid, Dicyclopentadien und Vinylcyclohexen.

Als Vinylcyclohexen ist insbesondere 1-Vinylcyclohexen-(3) geeignet. Das Molverhältnis von Maleinsäureanhydrid zu den Dienen beträgt 2 : 1 bis 1 : 5, das Molverhältnis von Dicyclopentadien zu Vinylcyclohexen liegt zwischen 0,95 : 0,5 und 1 : 1.

Weiterer Gegenstand der Erfindung ist die Verwendung der beanspruchten Copolymerisate aus Maleinsäureanhydrid, Dicyclopentadien und Vinylcyclohexen als Papieroberflächenleimungsmittel in wässriger alkalischer Lösung.

Die erfindungsgemässen statistischen Copolymerisate erhält man in an sich bekannter Weise, indem man die Polymerisation als Suspensions- oder Lösungspolymerisation in aliphatischen oder aromatischen Kohlenwasserstoffen, wie z.B. Toluol oder Xylol, in Alkoholen, wie z.B. Äthylenglykol oder Äthylglykol, oder in Äthern, wie z.B. Äthylenglykoldimethyläther oder Dioxan bei Temperaturen zwischen 60 und 150 °C, vorzugsweise zwischen 70 und 90 °C, in Gegenwart von radikalischen Initiatoren vornimmt. Als Initiatoren können Azoverbindungen, Peroxide oder Hydroperoxide dienen, z.B. Azobisisobutyronitril, Benzoylperoxid oder Di-tert.-Butylperoxid. Die Initiatoren verwendet man vorzugsweise in Mengen von 2 bis 6 Gewichtsprozent der Comonomeren.

Um die erfindungsgemässen Copolymerisate, welche Anhydridgruppen enthalten, wasserlöslich zu machen, überführt man sie mit Basen in ihre Salze. Dabei brauchen jedoch erfahrungsgemäss nicht alle Carboxylgruppen neutralisiert zu werden, da im allgemeinen ein Neutralisationsgrad von 80% – bezogen auf die Anzahl aller Carboxylgruppen – ausreicht. Als Kationen kommen vor allem Ammonium und/oder Mono-, Di- oder Trialkylammonium mit insgesamt bis zu 6 Kohlenstoffatomen sowie Alkaliionen in Betracht. Darüber hinaus kann man die erfindungsgemässen Copolymerisate in Form ihrer Umsetzungsprodukte mit Ammoniak oder primären aliphatischen oder aromatischen Aminen, wie z.B. Äthylamin, oder Anilin, oder sekundären Aminen, wie z.B. Diäthylamin, Morpholin oder Pyrrolidin und/oder aliphatischen Alkoholen, verwenden. Diese Umsetzungsprodukte besitzen ebenfalls ausgezeichnete Papierleimungseigenschaften.

Die für die Papierleimung benötigte Menge der erfindungsgemässen Copolymerisate liegt zwischen 0,05 und 3, vorzugsweise zwischen 0,015 und 0,50 Gewichtsprozent, bezogen auf das Papiergewicht.

Die als Papierleimungsmittel im Sinne der Erfindung eingesetzten Copolymerisate können mit für die Papierleimung gebräuchlichen anionischen Stärken kombiniert werden. Die so erhaltenen Leimflotten können erforderlichenfalls mit den üblichen Zusätzen versetzt werden. Die Verarbeitung kann nach den in der Papierherstellung üblichen Technologien erfolgen.

Beispiele

A. Herstellung der Copolymerisate

1. 1 Mol Maleinsäureanhydrid wird in 1000 ml Cumol als Lösungsmittel und in Gegenwart von 9,2 gr trockenem Benzoylperoxid als Initiator mit einem Gemisch von Dicyclopentadien (DCP) und 1-Vinylcyclohexen-(3) (VCH) polymerisiert. Das Molverhältnis zwischen Maleinsäureanhydrid und dem Gemisch der Diene beträgt 1 : 1. Nach Beendigung der Polymerisation wird abfiltriert und von den flüchtigen Anteilen getrocknet. Das Verhältnis der verwendeten Diene, die Ausbeuten und die Bezeichnungen der Versuche gehen aus der nachfolgenden Tabelle I hervor:

Tabelle I

| Bezeichnung | DCP: VCH (Molverh.) | Ausbeute (% d. Theorie) | |
|---|---|---|---|
| 1a | 1,00 : 0,00 | 93 | (Vergleichs- |
| 1b | 0,95 : 0,05 | 90 | versuch) |
| 1c | 0,90 : 0,10 | 91 | |
| 1d | 0,80 : 0,20 | 91 | |
| 1e | 0,70 : 0,30 | 92 | |
| 1f | 0,60 : 0,40 | 90 | |
| 1g | 0,50 : 0,50 | 93 | |

2. Die Versuche werden wie unter A beschrieben durchgeführt, nur mit dem Unterschied, dass das Molverhältnis von Maleinsäureanhydrid zu dem Diengemisch 1,2 : 1 beträgt. Bezeichnungen und Daten sind aus Tabelle II ersichtlich:

Tabelle II

| Bezeichnung | DCP: VCH (Molverh.) | Ausbeute (% d. Theorie) | |
|---|---|---|---|
| 2a | 1,00 : 0,00 | 90 | (Vergleichs- |
| 2b | 0,80 : 0,20 | 89 | versuch) |
| 2c | 0,60 : 0,40 | 87 | |

3. Versuchsausführung wie unter A1 aufgeführt, bis auf das Molverhältnis von Maleinsäureanhydrid zu dem Diengemisch, das hier auf 1 : 2 eingestellt wird. Weiteres ist in Tabelle III vermerkt:

Tabelle III

| Bezeichnung | DCP: VCH (Molverh.) | Ausbeute (% d. Theorie) | |
|---|---|---|---|
| 3a | 1,00 : 0,00 | 92 | (Vergleichs- |
| 3b | 0,80 : 0,20 | 94 | versuch) |
| 3c | 0,60 : 0,40 | 94 | |

4. Das Molverhältnis von Maleinsäureanhydrid zu dem Diengemisch beträgt in dieser Reihe 1 : 5. Alle anderen Versuchsbedingungen werden wie in A1 beschrieben durchgeführt. Aus der Tabelle IV sind die weiteren Daten ersichtlich:

Tabelle IV

| Bezeichnung | DCP: VCH (Molverh.) | Ausbeute (% d. Theorie) | |
|---|---|---|---|
| 4a | 1,00 : 0,00 | 92 | (Vergleichs- |
| 4b | 0,80 : 0,20 | 94 | versuch) |
| 4c | 0,60 : 0,40 | 94 | |

B. Darstellung der Leimungsmittel und Ergebnisse

Die oben gewonnenen Copolymerisate werden in einem Gemisch von 2 Teilen Wasser und 1 Teil 25% Ammoniak gelöst und mit einer anionischen Maisstärke, die im Handel unter der Bezeichnung «Amisol 05590» erhältlich ist, zu 8%igen Leimflotten kombiniert. Das Festkörperverhältnis von Leimungsmittel zu Stärke beträgt 0,4 : 7,84. Diese Flotten werden auf einer Laborleimpresse auf ein ungeleimtes 80 g-Papier so appliziert, dass die aufgebrachte Menge an Leimungsmittel 0,2% des Papiergewichtes beträgt. Die Trocknung des Papiers in der Leimpresse erfolgt bei 140–160 °C in ca. 5 sec. Die erzielten Leimungswerte enthält Tabelle V.

Tabelle V

| Als Leimungs- mittel verw. Copolymerisat | Wasseraufnahme (DIN 53 132) 60 sec. [gr/m²] | Leimungsgrad (DIN 53 145) [sec.] | Oberflächen- festigkeit (Dennison-Test) | Bemerkungen |
|---|---|---|---|---|
| ungeleimt | 89 | < 1 | 11 | Vergleich |
| 1a | 21,1 | 958 | 18 | Vergleichsversuch |
| 1b | 20,5 | 1056 | 20 | |
| 1c | 18,4 | 2151 | 20 | |
| 1d | 18,4 | 2192 | 20 | |
| 1e | 18,5 | 2255 | 20 | |
| 1f | 18,9 | 1882 | 20 | |
| 1g | 19,3 | 1002 | 20 | |
| 2a | 20,1 | 980 | 20 | Vergleichsversuch |
| 2b | 18,9 | 2143 | 20 | |
| 2c | 18,7 | 2021 | 20 | |
| 3a | 20,9 | 970 | 19 | Vergleichsversuch |
| 3b | 19,0 | 1823 | 20 | |
| 3c | 18,8 | 1903 | 20 | |
| 4a | 20,7 | 905 | 19 | Vergleichsversuch |
| 4b | 19,2 | 1802 | 20 | |
| 4c | 19,0 | 1854 | 20 | |

**Patentansprüche**

1. Copolymerisat bestehend aus Maleinsäureanhydrid, Dicyclopentadien und Vinylcyclohexen, wobei das Molverhältnis von Dicyclopentadien zu Vinylhexen zwischen 0,95 : 0,05 und 1 : 1 und von Maleinsäureanhydrid zu dem Diengemisch 2 : 1 bis 1 : 5 beträgt.

2. Copolymerisat nach Anspruch 1, bestehend aus Maleinsäureanhydrid, Dicyclopentadien und 1-Vinylcyclohexen-(3).

3. Copolymerisat nach Anspruch 1 bis 3, dadurch gekennzeichnet, dass das Molverhältnis von Maleinsäureanhydrid zu den Dienen 2 : 1 bis 1 : 1 beträgt.

4. Verwendung der Copolymerisate, hergestellt nach den Ansprüchen 1 bis 4, als anionisches Papieroberflächenleimungsmittel in wässriger alkalischer Lösung.

**Claims**

1. Copolymer consisting of maleic anhydride, dicyclopentadiene and vinylcyclohexene, wherein the molar ratio of dicyclopentadiene to vinylhexene is between 0.95 : 0.05 and 1 : 1 and the molar ratio of maleic anhydride to the diene mixture is from 2 : 1 to 1 : 5.

2. Copolymer according to Claim 1, consisting of maleic anhydride, dicyclopentadiene and 1-vinylcyclohex-3-ene.

3. Copolymer according to Claims 1 to 3, characterised in that the molar ratio of maleic anhydride to dienes is from 2 : 1 to 1 : 1.

4. Use of the copolymers, prepared according to Claims 1 to 3, as anionic paper surface-sizing agents in aqueous alkaline solution.

**Revendications**

1. Copolymères constitués d'anhydride maléîque, de dicyclopentadiène et de vinylcyclohexène, le rapport molaire du dicyclopentadiène au vinylcyclohexène étant compris entre 0,95 : 0,05 et 1 : 1, et de l'anhydride maléîque au mélange de diènes entre 2 : 1 et 1 : 5.

2. Copolymères selon la revendication 1, constitués d'anhydride maléîque, de dicyclopentadiène et de 1-vinylcyclohexène-(3).

3. Copolymères selon l'une quelconque des revendications 1 ou 2, caractérisés en ce que le rapport molaire de l'anhydride maléîque aux diènes est compris entre 2 : 1 et 1 : 1.

4. Utilisation des copolymères préparés selon les revendications 1 à 3, comme agent anionique d'encollage de la surface de papier en solution aqueuse alcaline.